# EUROPEAN PATENT APPLICATION

(11) **EP 1 111 951 A2**
(43) Date of publication of application: **27.06.2001**
(21) Application number: 00310383.5
(22) Date of filing: 22.11.2000
(51) Int. Cl.: H04Q 7/38

(54) **Wireless access systems and method of portable device location therein**

(30) Priority: 21.12.1999 US 469145
(71) Applicant: Nortel Networks Limited, Montreal, Quebec H2Y 3Y4 (CA)
(72) Inventor: Moran, Thomas, Kingston, Galway City (IE)
(74) Representative: Christophers, Rachel, Dr.

(57) **Abstract**

A portable device (12a, 12b) within a communication system (10), such as a DECT or wireless LAN architecture, takes downlink measurements from, typically, at least three base stations (11a-11g) which themselves each transmits a unique base site identifier. The portable device then reports signal quality measurements associated with particular base stations to a server (16) which correlates the signal quality measurements, such as received signal strength and bit error rate, against a layout architecture plan of the base stations within a coverage area of the communication system (10). A relative location of the portable device (12a, 12b) is then ascertained by the server, with the relative location information made available to a requesting client, such as a PC (15).

## Description

### Background to the Invention

This invention relates to a wireless access communication system and a method of operating such a system. The invention relates, in particular, to a wireless access communication system in which portable devices may be accurately and dynamically located and a method of physically locating portable devices active within such a system.

### Background

The invention finds particular application in a DECT (Digital Enhanced Cordless Telecommunications) standard wireless system and also for other DECT standard variants such as PWT, DECT running at 2.4 GHz using frequency hopping techniques, and wireless LAN 802.11 standard, although the invention can be applied to any wireless system technology with the portable device and system infrastructure.

Portable device may include a wide range of devices, such as a mobile phone and portable computing equipment, such as a palmtop or laptop, or other computing and/or telephony equipment.

A wireless access communication system usually comprises a plurality of base stations linked to form a network that provides radio coverage of a designated service area or site. Portable devices within the service area may communicate either with each other or with other equipment also connected to the network via a local base station using radio frequency communication. Such wireless access systems are used for providing telephony service or a wireless local area network (LAN). Each portable device within the system maintains a map of the radio signal strength (RSS) of proximate base stations. Optionally, the bit error rates (BER) of any bearer (i.e. communication link) set up with one or more base stations may also be measured. Typically for voice services, this information is used by the portable device in making a decision as to which is the 'best choice' base station to use for optimum performance. As the portable device moves away from one base station and approaches another, the internal map of RSS (and BER if appropriate) is updated, allowing the portable to decide if a move to a different base station is necessary. Unlike the Global System for Mobile (GSM) communications, the DECT standard specifies that the portable makes the decision regarding handover but it does not specify the algorithm that the portable uses to make this decision. Thus it is possible to have DECT portables that are fully compliant to the DECT standard with widely different perceived quality due to the quality of the handover algorithm. Compatibility between systems is not guaranteed.

US Patent 5,873,040 describes a system arrangement and method for determining location of a wireless mobile unit within a mobile cellular telecommunication system involved in a call for public emergency assistance (e.g. a "911" call). The system is cost-effective in that it makes extensive use of existing telecommunication infrastructures, and does not require either special hardware or software at either the mobile unit site or the emergency assistance center handling a call. The system features share use of a computer and specially defined database among a plurality of mobile switching offices serving a larger plurality of mobile base stations, the latter serving an even larger plurality of antenna and transceiving sites within predefined cellular regions. Signal strength measurements at the base stations are passed through the switching offices to a shared computer and the latter uses the measurements to calculate a small area for which it would be practical to conduct a search if the mobile unit user requiring assistance is unable to help in determining his/her location. The calculated area and database are used to furnish the emergency assistance center handling the call with a detailed mapping of the calculated area, highlighting specific features (terrain, buildings, signs, etc.) that could be used to question the caller in a manner likely to produce responses from which the caller's location could be either precisely fixed or at least narrowed to a small part of the mapped area.

US Patent 5,740,538 describes a system and method that will identify the location of a wireless terminal in a wireless communication system with a plurality of base stations. The system associates a location identification signal with each base station, such as an area code and an exchange of a telephone number in the geographic area of the base station. When a call is connected through a base station, the system modifies the caller-ID signal for the wireless terminal with the location identification signal of the base station. Thus, the system identifies the location of a wireless terminal.

The concepts described in the above patents require the information to be extracted from the base station, thus limiting the accuracy of the locating information.

### Summary of the Invention

The invention provides a computer system as defined in claim 1; a method as defined in claim 10; a wireless communication network as defined in claim 11 and a portable communication unit as defined in claim 12.

According to an example there is provided a server for identifying, in use, a relative location of a portable communication unit of a wireless access communication system having a plurality of base stations providing service to a coverage area, the server comprising:
a layout/architecture plan of the base stations in the coverage area;
means for correlating signal quality measurements associated with specific ones of said base station with the layout/architecture plan to calculate the relative location of an active portable device, the signal quality measurements received in an uplink transmission from the active portable device.

According to another example there is provided a wireless access communication system for locating an active portable device within a coverage area, the wireless access communication system comprising:
a plurality of base stations arranged to provide service to the coverage area, each of the plurality of base stations having a unique identifier and means for transmitting downlink signals including the unique identifier;
a network; and
a server connected through a network to the plurality of base stations, the server comprising:

a layout/architecture plan of the base stations in the coverage area; and
means for correlating signal quality measurements associated with specific ones of said base station with the layout/architecture plan to calculate the relative location of an active portable device, the signal quality measurements received in an uplink transmission from the active portable device.

According to another example there is provided a wireless access communication system, wherein, in call, an active portable device measures a bit error rate of downlink transmissions from a proximate base station.

Thus the information used to locate the portable device is extracted directly from the portable and not from the base station (although it may be accessed *via* the base station). In the case of many wireless technologies (DECT, 802.11, etc.) there is usually more than one base station within range of the portable device. The RSS and BER for multiple base stations can be extracted from the portable to provide a more accurate location. Averaging techniques may be used (either on the portable or on the server) to provide a stable and more accurate location reading. Typically the RSS for a single base station can vary widely due to Rayleigh effect and also due to transient conditions in the environment. With information regarding multiple base stations RSS and/or BER combined with averaging techniques, the server can achieve a high degree of accuracy.

The location information may be accessed directly from the server or from a remote application having access to the server by any conventional means.

The location information is dynamically available, i.e. it can be made available to the server at any time and for any period of time. In the specific case of a portable telephone, this means that the location information can be made available at any time that the portable is active, i.e. even when the portable is idle (assuming it is powered up) or at any time during a telephone call. The portable device may provide the list of measured signal strength against base station identifier continuously, only on demand from the server or at predetermined intervals or in response to predetermined events. Equally the server may optionally maintain a permanent record of the information (either before or after carrying out the calculation to establish physical location) or, for example, may automatically send its location information to a remote application, based on a number of different scenarios that can be specific to a particular system, such as:
Emergency 911 calls;
Requesting service;
Registering with the wireless access system;
Performing handover from one base station to another;
'Dead Man' applications: In some countries, when workers are mobile and working in a potentially hazardous environment, there are regulatory requirements that these workers must carry a device that will generate an alarm if the worker becomes immobile, This alarm is a signal that can alert a central monitoring location that there is a possibility the worker may have been injured or is in need of assistance;
Request from another portable: in this case one portable can query the location of another portable in real time (either during a call or in idle mode for either portable);
Any other application that requires the portable device to offer information to a remote application regarding its whereabouts.

The system thus can support portable devices roaming through a network of wireless systems. One example of this could be a large number of geographically separate divisions of a large corporation, where the portable device is allowed to roam over all of these sites and access services at each site. The remote application can identify the site at which the portable device is located and can then subsequently pinpoint the location of the portable device within that particular site.

### Brief Description of the Drawings

Embodiments of the invention are described below, by way of example only, and with reference to the following figures in which:
Figures 1 illustrates an implementation for a DECT product in a single site;
Figures 2 illustrates an implementation for a DECT product in a single site;
Figures 3 illustrates an implementation for a DECT product in a multiple site;
Figure 4 shows an overview of the software functionality according to the invention;
Figures 5 shows a message sequence chart according to the invention;
Figures 6 shows a message sequence chart according to the invention.

### Description of the Preferred Embodiments

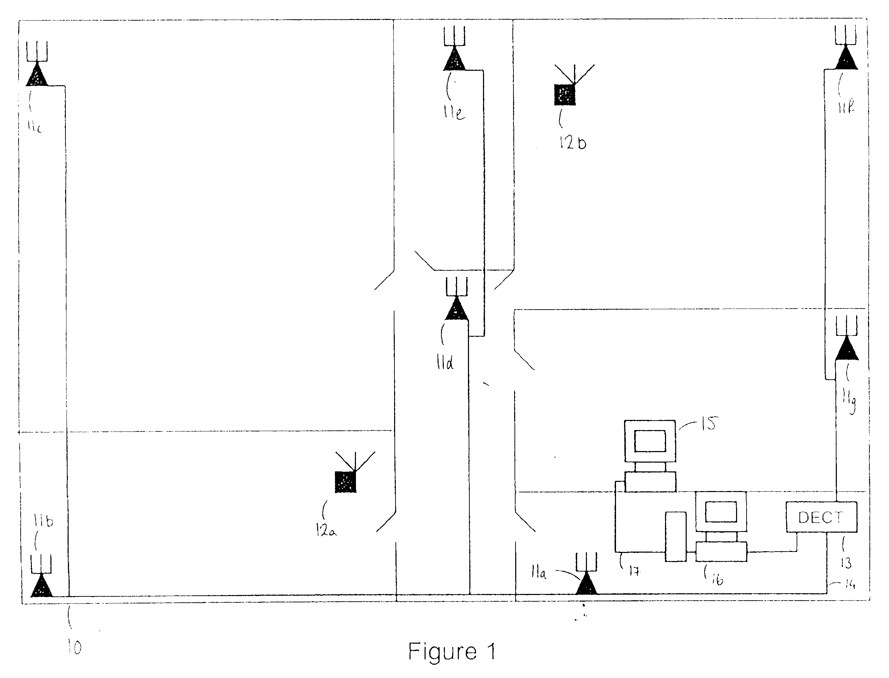

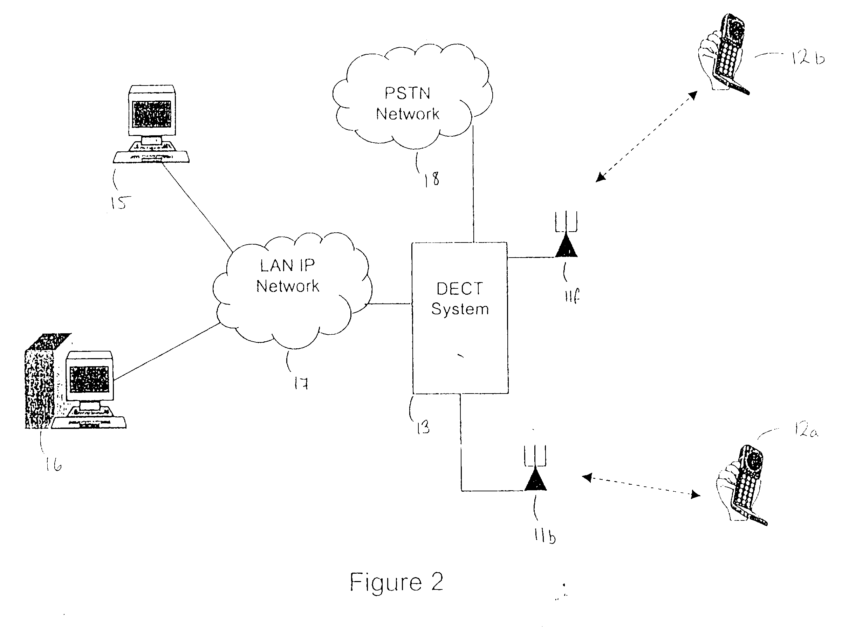

Figures 1 & 2 illustrate an implementation for a DECT product in a single site scenario. This installation could be a large or small site (10) or even a campus environment but, for convenience, a small site is depicted in Fig. 1. Typically the site is fully deployed with an adequate number of base stations (11a, 11b, ... 11g) so that a DECT portable (12a/12b) can function (i.e. have access to voice and data services) wherever it roams in the site, since the portable is always within coverage of at least one base station wherever it roams within the installation. The base stations are connected to each other and to the DECT system 13 via a network backbone 14. The DECT system is also connected to the public telephone network 18, either directly as shown in Figure 2 or via a local area network (LAN) 17 supporting, for example, Internet protocol (IP) communication or the like. A Web browser or other type of client application on a PC 15 may be used to access an application server 16 via the LAN 17 to request the location of the portable. Typically either the directory number or name of the person being tracked is entered by the requesting client (e.g. PC 15), and the application server 16 then responds with appropriate location information to the client, either from stored information or after having requested the pertinent information directly from the portable. Details of the functionality required for each of the system components are described below.

The application server 16 is used to enable extra functionality, e.g. telephone directory lookup, SMS, Alarms, etc. to the portable devices. The application server 16 must implement the following application functionality:
Set up/clear down E.2 calls to any portable (E.2 calls are low data rate calls; the profiles of these calls are defined in the DECT Standard);
Accept incoming E.2 calls from any portable;
Maintain an up-to-date map of the site location including the exact location of all of the base stations, and the base station identifiers;
Maintain an up-to-date database of all portables registered on the DECT system;
Process location information being received from a portable unit whose location is queried. This information may vary rapidly, so the application may need to average this information in order to achieve a meaningful result;
Offer a server interface to any client that is connected to the LAN. The information presented to a browser may be of a graphical nature using HTML encoding for standard web browsers. Alternatively, the information may be in WML format (Wireless Markup language) for smaller devices that have restricted bandwidth and display capabilities.

In addition, the application server 16 could optionally implement the following functionality:
Dead Man Applications;
Automatic alarm generation, based on 911 calls.

The DECT system infrastructure provides the necessary software and hardware for the normal DECT telephony operation. In order to support the invention, extra software functionality must:
Provide a single IP connection to the DECT system for connection to the LAN;
Implement the DECT E.2 Profile;
Direct all E.2 traffic originating from any portable towards the IP LAN connection;
Direct IP traffic (that will encapsulate the E.2 traffic) received from the application towards a specific portable on the system for which that traffic is destined;
Provide the necessary IP/E.2 data encapsulation and extraction.

There are a number of DECT standards dedicated to transporting data over the wireless interface. The standard of the particular embodiment described below is the E.2 Profile, which is aimed at transporting low bit-rate data and is used to implement functionality such as SMS (Short Message Service).
The E.2 Profile is used to set up a data connection to the portable, and is thus the transport mechanism used for requesting the portables RSS and BER map and also for transferring the map to the application server 16.

The portable device must at minimum support the following functionality:
Support the E.2 Profile; and
Respond to requests from the application server 16 by sending RSS and/or BER information on the E.2 data channel for proximate base stations.

In addition the following functionality may optionally be included on the portable:
The user is notified of a location request from the application server 16 via either visual or audible means on the portable device. (This could be a mandatory requirement, depending on requirements that users must be notified if their location is being tracked);
The portable could implement an interface to the application server and could itself initiate a location track on another DECT portable;
The portable could be configured to automatically set up a connection to the application server and supply its location information, for example if a certain sequence of digits are dialled (e.g. sequence off-hook, 9,1,1) or at predetermined intervals;
The portable could be configured to automatically set up a connection to the application server after it registers to a DECT system; or
The portable could be configured to send a list of measured signal strength against base station identifier to the application server 16 continuously or at predetermined intervals. It will be appreciated that the association between base station and received signal strength and/or BER is actually a quantitative measure of signal quality, and so the term "signal quality" is used in the context of this invention to mean one or both, as appropriate, of RSS or BER.

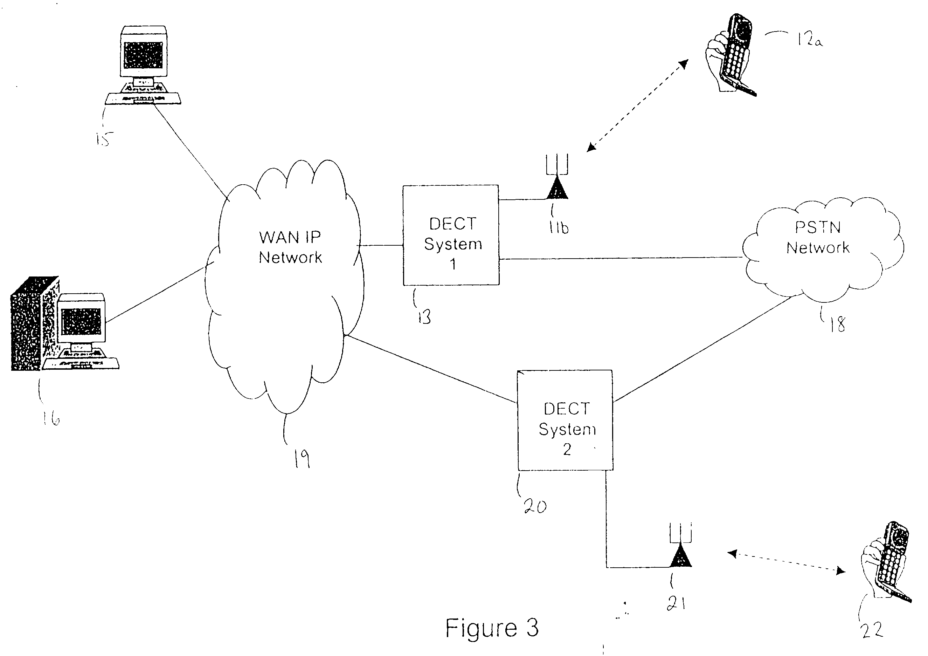

Operation of the multi-site embodiment of Figure 3 is very similar to the single site embodiment, with the additional requirement that the system must first establish the site at which the portable is located. Once the site location is discovered, the specific location tracking mechanism of the preferred embodiment operates as described in detail below. It is assumed that multi-site roaming of portables among a network of DECT systems is already part of the system functionality.

In this example, two sites are covered by a single wide area network (WAN) running an IP protocol and each site is managed by a separate DECT system manager (13,20). After receiving the initial request from the client 15, the application server 16 will initially try to set up a connection to the portable 22 at its home location (DECT system 1). If the portable is not present (or powered down) this is detected using a DECT page fail mechanism. (In the DECT standard, a page fail is generated by the DECT system if it does not receive a response when attempting to page a portable). The application server must then query all of the other potential DECT sites (DECT system 2) on the network, according to some pre-defined searching rule. Each of these DECT systems will in turn return a page fail (if the portable is not present) or the actual location information (if the portable is present) as described above.
In the exemplary instance of a DECT portable, the portable is configured to make received signal strength measurements whenever it is active, i.e. when the portable is powered up and either in a call scenario or in an idle state. The portable is generally restricted to making BER measurements to in-call situations.

The present invention operates to provide more detailed location information, typically upon request, about the whereabouts of a particular unit, such as a DECT (or equivalent LAN-based) portable. The system of the preferred embodiment, of course, is operationally restrained by a requirement for the particular unit of interest being actively registered with the network as a whole, since the particular unit is required to (at least periodically) undertake incident signal quality measurements from at least three (and preferably more) proximate base station transceivers, and then to report an RSS and/or BER result for each proximate base station to the application server 16. Of course, fewer base stations could be used but accuracy is compromised.

Clearly, at registration (i.e. upon power-up) of the portable unit with the system, a serving cell is identifiable to the application server 16. More refined positional information can, however, be obtained by the system and made available to an enquiring client, e.g. PC 15. Provided that the application server 16 has a layout/architecture plan for its base stations (which could be acquired through manually-triggered input or through an automated process of smart port addresses accessible by the base stations), downlink RSS/BER information reported by the portable unit back to the application server 16 can be used to provide a form of triangulation mechanism. More specifically, assuming that downlink transmissions are at a predetermined power level and that the interference environment for the system (on a cell-by-cell basis) can be considered substantially homogeneous (i.e. similar or constant), then a level of attenuation of each downlink transmission (from different but identified base stations) is indicative of a relative displacement of the portable from the base station responsible for that downlink transmission. Consequently, control intelligence within the application server can locate (with a reasonable degree of accuracy) the location of the portable within the system (as projected onto its layout/architecture plan). The position information can then be relayed to the client, or otherwise stored for historical logging purposes.

As will be appreciated, the flexibility for base station location provided in a DECT-type environment generally means that there must be a manual correlation between base station identify and specific physical location, e.g. kitchen, East wing, North wall.

In summary of the preferred mechanism, once a portable is active then it can receive, monitor and then report downlink transmission qualities of radio proximate base stations that are individually identifiable to the portable by virtue of their unique identification labels sent in downlink transmissions emanating therefrom.

The application server 16 is therefore able to make use of reported signal qualities (such as RSS and/or BER) to infer displacement of the portable from each identified base station and hence to provide relative positional information to, for example, a client, which positional information can be used for tracking or other management purposes.

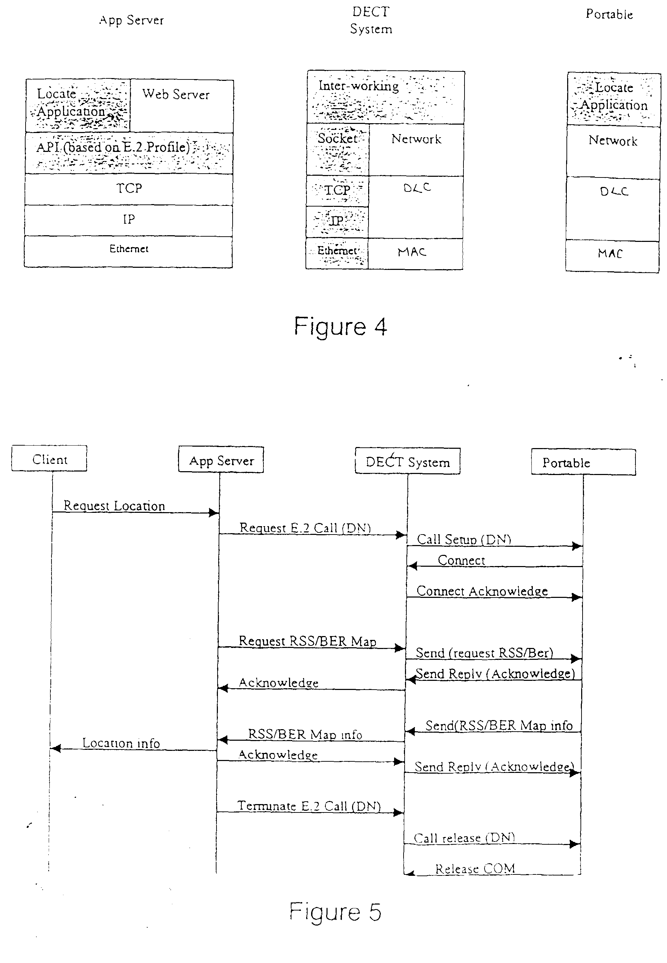

Figure 4 shows an overview of the software functionality and how it is distributed over the system components of Figures 1 and 2. The shaded areas in Figure 4 show the components that are not part of the DECT standard implementation but are features which enable the system of the invention.

The application server has a standard TCP/IP stack, and the underlying layer-2 depicted is Ethernet, although any other layer-2 protocol could be used. An API (Application Programmers Interface) is added on top of the TCP/IP stack and this offers an interface to the locate application. This interface will include a small set of commands that can be used to communicate with the Portable device (e.g. set up an E.2 Call, request RSS information, etc).

The locate application runs on the application server 16 and it interfaces with both the API (which enables communication with the portable device) and also with a standard Web Server, which enables communication with other member Web Clients.

On the DECT system, again a standard TCP/IP stack is implemented on top on an Ethernet Layer-2, although any other layer-2 protocol could be used. The DECT operating system opens a complimentary socket pair as a way of setting up a connection between layers. As will be appreciated, the socket pair provides access between applications and protocol stacks and therefore essentially provides an inter-working capability between layers. Each socket pair contains pairs of associated IP addresses and port numbers. Inter-working allows the transfer of packets of information (such as set-up messages and RSSI reports from a portable) and then the repackaging of such packets into a format that can be transported by the DECT stack (Network, DLC and MAC layers). The DECT system simply acts as a translation mechanism for these packets of information, converting them from one format to another. It does not perform any intelligent tasks on these packets of information. The DECT system can be viewed purely as a transport mechanism for converting the packets of information from a wired LAN infrastructure into a DECT wireless infrastructure.

On the DECT portable, the portable has a standard DECT stack (Network, DLC, MAC). In addition, the locate application has the ability to take RSS and/or BER information and send it over a standard E.2 Call. There may also be additional functionality in the locate application, as described above.

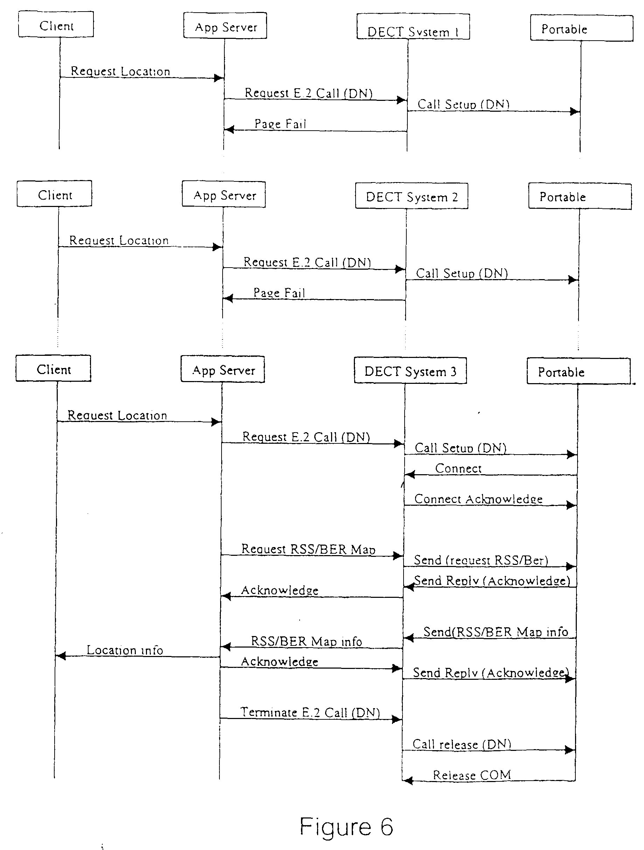

Figures 5 and 6 show a message sequence chart for some typical location tracking scenarios.

Initially, the Client sends a 'location request' to the locate application on the application server 16. This may be implemented by the client filling in some information on a HTML page (Hypertext Markup Language) or indeed any other mark-up language encoded web page. The information can be anything that uniquely identifies the portable device (e.g. directory number, name etc). This information is passed from the Web server application to the locate application.

The locate application requests the setting up of a data call, using the API. This in turn sets up a socket connection to the DECT system which is then triggered to set up an actual E.2 data call to the required portable.

The 'Call Setup', 'Connect' and 'Connect Acknowledge' messages are all standard messages that are part of the DECT E.2 Profile.

The location application requests the RSS and (optionally the BER information), using the API. This information is transferred to the DECT system using the previously set up socket connection.

When the DECT system receives the 'request RSS/BER Map' message, it encodes this information within an E.2 data packet and sends it to the portable, using the existing E.2 call that has already been set up.

The 'Send' and 'Send Reply' messages are also standard messages that are part of the DECT E.2 Profile.

The 'Acknowledge' message may also be forwarded from the DECT system back to the Application server, using exactly the same transport mechanism (i.e. socket over TCP/IP).

The portable then transmits the actual RSS/BER map information to the DECT system, again using a standard E.2 data transfer. This information is passed back to the application server 16 using the existing socket).

When the application server 16 receives the location information, it:
(a) acknowledges the receipt of the information by sending an acknowledge message back to the portable through the existing Socket and E.2 call transport mechanism, and
(b) sends the *processed result* of this information to the Web Server 15 which in turn will update the Web page that is being viewed by the Client.

Finally, the application server 16 requests the DECT system to clear down the E.2 call and the socket connection is then disconnected.

In Figure 6, the Client sends a 'location request' to the locate application on the application server 16. This may be implemented by the client filling in some information on a HTML page, as before. Once again, this information can be anything that uniquely identifies the portable device (e.g. directory number, name, etc). This information is passed from the Web server application to the locate application.

The Locate application requests the setting up of a data call, using the API. This in turns sets up a socket connection to the DECT system which is then triggered to set up an actual E.2 data call to the required portable.

The 'Call Setup' message is sent to the DECT portable; however in this case, there is no response from the portable, as the portable may be out of range of any on the Base Stations on this DECT system 1.

Exactly the same procedure is repeated for DECT system 2, and again in this case the result is a page fail as the Portable is not within range of DECT system 2.

Finally the Client does have success when searching system 3 and in this case the message sequence is exactly the same as described for Figure 4.

The multi-site implementation is a very simple one and relies on the Client manually searching a number of different DECT systems. Alternatively, rather than a brute-force type search mechanism, it could be also possible to have a centralised web server that will initially search the user's home DECT system and then automatically continue to search all other potential DECT systems, including through an ordered probability search based on historically compiled log-on activity. In this latter respect, the Client simply enters the request once and eventually gets returned the result of the complete search.

## Claims

1. A computer system for identifying a relative location of a portable communication unit in a wireless communication network having a plurality of base stations providing service to a coverage area, characterised in that said system comprises:
(i) an input for accessing information about the location of the base stations in the coverage area;
(ii) an input for receiving signal quality measurements said measurements having been made by the portable communication unit; and
(iii) a processor arranged to determine the relative location of the portable communication unit on the basis of at least the received signal quality measurements and the accessed location information.

2. A computer system as claimed in claim 1 wherein the signal quality measurements comprise received signal strength measurements of downlink transmissions.

3. A computer system as claimed in claim 1 wherein the signal quality measurements comprise a bit error rate of downlink transmissions.

4. A computer system as claimed in any preceding claim wherein the signal quality measurements comprise power levels of downlink transmissions.

5. A computer system as claimed in any preceding claim wherein said wireless communication network comprises a digital enhanced cordless telecommunications (DECT) standard wireless system.

6. A computer system as claimed in any of claims 1 to 4 wherein said wireless communications network comprises a wireless large area network (LAN) system.

7. A computer system as claimed in any preceding claim wherein said portable communications unit is powered up.

8. A computer system as claimed in any preceding claim wherein said input for receiving signal quality measurements also receives a base station identifier associated with each received signal quality measurement.

9. A computer system as claimed in any preceding claim wherein said input for receiving signal quality measurements is arranged to receive those measurements at an occurrence of at least one of:
continuously;
at predetermined intervals;
in response to requests; and
in response to predetermined events.

10. A method of identifying a relative location of a portable communication unit in a wireless communication network having a plurality of base stations providing service to a coverage area, characterised in that said method comprises the steps of:-
(i) accessing information about the location of base stations in the coverage area;
(ii) receiving signal quality measurements, said measurements having been made by the portable communication unit; and
(iii) determining the relative location of the portable communication unit on the basis of the received signal quality measurements and the accessed location information.

11. A wireless communication network comprising:
(i) a plurality of base stations;
(ii) at least one portable communication unit; and
(iii) a computer system as claimed in claim 1

12. A portable communication unit for use with the computer system of claim 1, said portable communication unit comprising:-
(i) signal quality measurement apparatus arranged to measure the signal quality of signals received from one or more of said base stations in use;
(ii) a memory for storing information about the measured signal quality; and
(iii) a transmitter for transmitting at least some of the stored information to the wireless communication network.
